# EUROPEAN PATENT SPECIFICATION

(11) **EP 0 492 548 B1**
(45) Date of publication and mention of the grant of the patent: **05.03.1997**
(21) Application number: 91122022.6
(22) Date of filing: 20.12.1991
(51) Int. Cl.: H04J 3/07

(54) **Method for reducing a phase noise introduced in a resynchronisation of digital signals using justification, and integrated circuits for the implementation of such a method**
Verfahren zur Reduzierung von Phasenrauschen verursacht durch Neusynchronisierung von digitalen Daten mittels Impulsstopftechnik und integrierte Schaltungen geeignet zur Implementierung eines solchen Verfahrens
Méthode pour réduire un bruit de phase introduit par une resynchronisation de signaux numériques à l'aide de justification et circuits intégrés pour la mise en oeuvre d'une telle méthode

(30) Priority: 21.12.1990 IT 2249690
(43) Date of publication of application: 01.07.1992
(73) Proprietor: ALCATEL ITALIA S.p.A., 20158 Milano (IT)
(72) Inventor: Licata, Giuseppina, I-20090 Segrate (MI) (IT); Lometti, Alberto, I-22055 Merate (CO) (IT); Valussi, Romano, I-20060 Agrate (MI) (IT)
(74) Representative: Strehl Schübel-Hopf Groening & Partner

(56) References cited:
- EP-A- 0 248 551
- DE-A- 3 315 372
- US-A- 4 066 978
- ELECTRONICS 27 November 1967, NEW YORK US pages 95 - 102 E. W. DROGIN 'Steering a course to safer air travel'
- IEEE TRANSACTIONS ON COMMUNICATIONS vol. 37, no. 11, November 1989, NEW YORK US pages 1231 - 1236 D. CHOI 'Waiting Time Jitter Reduction'

## Description

### Background of the invention

The present invention relates to a method for reducing a phase noise introduced in a resynchronisation by justification of digital signals used in the data and/or voice transmission, and a device for the implementation of such a method.

In the transmission of numerical signals the justification method is widely used for desynchronising a plesiochronous stream, characterised by using a local clock.

In particular this method is used in numerical multiplexing devices. An international standard (CITT, e.g. recommendations G707 - G709 for the multiplexers of the synchronous hierarchy) establishes the characteristics of tributary streams, the characteristics of aggregated streams, the structures of frames and the position and the number of justification digits for each level of the consolidated multiplexing hierarchies.

The traditional structure of a resynchronizer using justification includes an elastic memory into which data is written with the clock rate associated to the plesiochronous stream and from which data read out by the local clock, to which is appended a frame that includes digits of the so-called justification or filling.

The use or non-use of filling digits as information or redundancy allows to make the resynchronization between the remote and local clocking.

Three types of the justification method can be distinguished: positive, negative or positive-negative justification, according to whether the filling digits are normally used as information, not usually used as information, or both types of justification digits are present in each frame.

Conventionally the use of justification digits is established once for each frame, based on the comparison between the digital signal representing the phase difference between the local and remote clock and one (in case of positive or negative justification) or two (in case of positive-negative justification) fixed thresholds.

It is known in literature (e.g. D. L. Duttweiler, "Waiting Time Jitter", Bell Syst. Tech. J. vol. 51, Jan. 1972, indicated in the following as D1), that, operating the justification in the above mentioned manner, introduces a phase noise in the resynchronized stream, that is clearly evident at the moment of desynchronization by PLL ("Phase Locked Loop") and that depends on the frequency of the stream, on the local clock frequency and on the frame structure, through the value of the filling ratio ρ, defined as:$\text{ρ =} \frac{{\text{f}}_{\text{reading}} {\text{- f}}_{\text{writing}}}{{\text{f}}_{\text{frame}}}$

In particular, the phase noise is particularly high when the filling factor reaches values near to a rational number p/q, where p and q are integer positive numbers.

The worst case is that present in positive-negative justification, in which the value of filling ratio is near zero and the phase noise can have an amplitude of 1 UIpp ("Unit of peak-peak pulse").

The international standard establishes the limits related to the phase noise present in the desynchronized stream (CCITT, e.g. recomm. G783 for the synchronous multiplexers) and, in case of plesiochronous multiplexers, it establishes the frame structures so that these limits have to be respected when operating the justification by the above mentioned conventional method.

The case of synchronous hierarchy, whose standardization process is actually in execution phase, clearly shows that the structures of the standardized frames do not allow the conventional fulfilment of the justification techniques the introduced phase noise can result too high.

In fact the so called "mappings" of plesiochronous tributaries in VCs ("Virtual Containers") of the frame STM-1 ("Synchronous Transport Module of Level 1"), forming the base frame of the synchronous hierarchy, cause filling ratios particularly unfavourable with regard to the phase noise introduced in the signal, and in some circumstances they cause the worst case of positive-negative justification, with filling ratio being near zero.

The literature has recently proposed (e.g. D. Choi, "Waiting Time Jitter Reduction", IEEE Trans. on Comm. vol. 37, no. 11, Nov. 1989, in the following indicated by D2) different techniques for reducing the phase noise introduced by the resynchronization process in the case of positive-negative justification.

These techniques are all based on the hypothesis that it is possible to reduce the phase noise by artificially modifying the value of the filling ratio by using a generation procedure of the phase comparing signal which is more complex than the procedure employed in conventional techniques.

By using the proposed techniques it is possible to reduce the phase noise of resynchronization following the positive-negative justification within the limits established in international standardization, wherein the complexity of circuits is increased. But this solution has a limit and a drawback. The limit is that the literature does not disclose techniques suitable for reducing the phase noise in the case of purely positive or negative justification where the filling ratio is "unfavourable" in the above mentioned meaning.

The drawback is that the reduction value is limited by the presence of "peaks" in the phase noise obtained after the desynchronization towards the detuning of the plesiochronous stream with respect to the nominal frequency value.

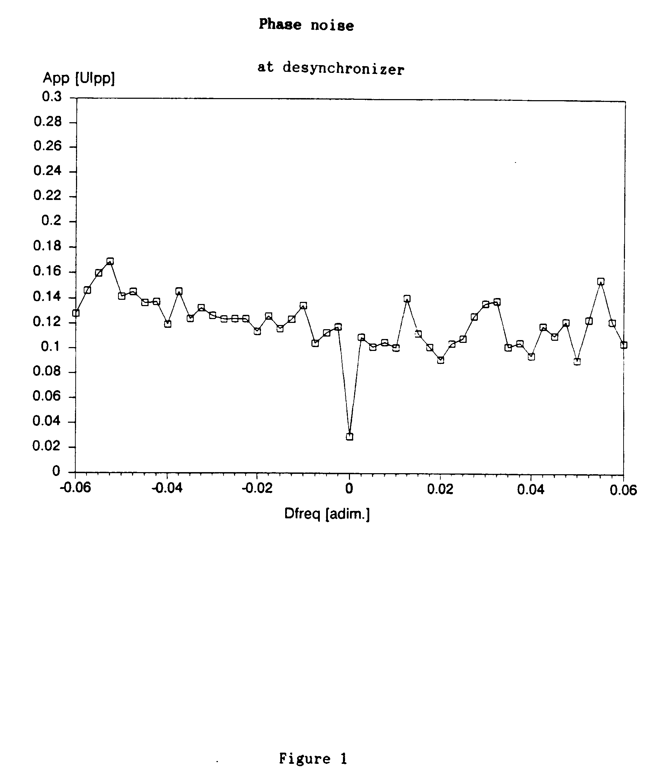

To better understand the above problem, Figure 1 refers the result of a simulation made for the case of a plesiochronous tributary at 2,048 Mb/sec mapped by the positive-negative justification in a VC-12 ("Virtual Container with level 1,2") of a frame STM-1.

The ordinates indicate the peak-peak amplitude App of the phase noise or jitter, obtained in response of the desynchronization made by PLL, while the abscisses refer the detuning D_{freq} between the real frequency of the plesiochronous flow and the nominal frequency, normalized at the frame frequency.

It is possible to cause the peaks to remain included within the standard limits, typically by the selection of a suitable value of P obtained with an increase of the circuit complexity, but it is not possible to avoid completely these peaks.

Further, from EP-A-0 248 551 a method for reducing phase noise introduced by synchronisation is known, wherein justifications of a plesiochronous flow with a local clock are carried out. Further, in this document a system for implementation of such a method is described. According to the known technique, a synchroniser comprising an elastic store is written with the timing of a plesiochronous signal and is read out with a local clock onto which a frame including the figures of justification has been placed. These figures of justification are determined from comparison of the difference of phase between a local signal and a remote signal with thresholds which are cyclically changed.

### Description of the invention

It is the object of the present invention to provide a method and a device therefor, which operate with positive, negative or positive-negative justification and allow to reduce the re-synchronisation phase noise to a value practically independent from the detuning of the plesiochronous stream with respect to nominal frequency value.

This object is met by a method according to claim 1 and a device according to claim 5. Preferred embodiments are disclosed in the depending claims.

According to the invention, a phase comparison signal between a local clock signal and a remote clock signal is obtained, said phase comparison signal is modified by a suitable scale factor, the modified phase comparison signal is integrated with a suitable frequency, the integrated signal is quantised with a suitable pitch, and the justification events which are to be overlapped to a local unjustified clock signal are determined in conjunction with the transitions of the quantised signal and with the justification opportunities relating to the used frame format.

### Brief description of the drawings

The different features and advantages of the invention shall be more easily understood by the description of some (preferred but not limiting) embodiments represented in the annexed drawings, in which:
Fig. 1 shows the results of a plesiochromous tributary at 2,048 Mb/s mapped by the positive-negative justification in a VC-12 ("Virtual Container with level 1,2") of a frame STM-1;
Fig. 2 shows a block scheme of the method according to the invention in a simplified embodiment;
Fig. 3 represents one of the possible and advantageous implementations of the method;
Fig. 4 represents a variant of the implementation described in Fig. 3;
Fig. 5 shows the results of a simulation related to the application of the invention to the case of Fig. 1, when compared with the results already referred in said figure; and
Fig. 6 refers to the results of a simulation related to the application of the invention to the case of a plesiochromous tributary at 44,736 Mb/s, mapped by positive justification in a VC-12 ("Virtual Container of level 3.2") of a frame STM1, and, by comparison, the performances related to the application of the conventional techniques.

### Detailed description of the preferred embodiments

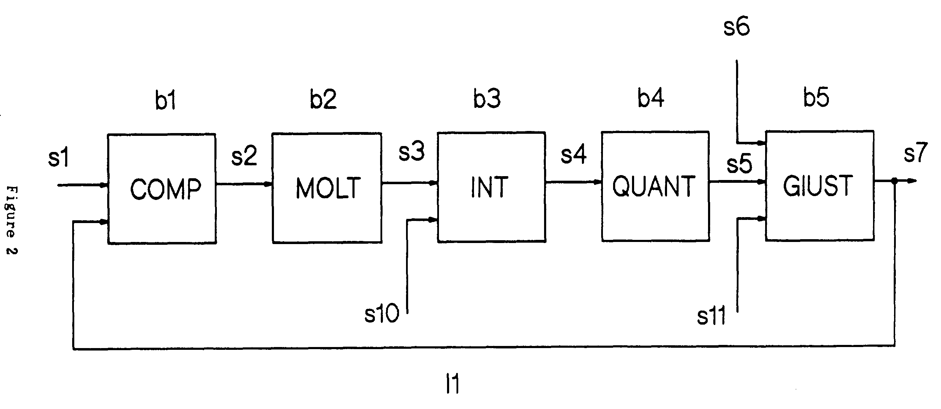

Figure 2 shows a block b1 (COMP) representing the phase comparison function between a remote clock signal s1, coming from a far source (not shown) and associated with a data stream to be resynchronized, and a local justified clock signal s7.

The result of a block processing b1 is a signal having a phase difference s2, which is multiplied in a block b2 (MOLT) by a constant K1, thus generating a signal s3. A block b3 (INT) carries out the integration of the signal s3 at a clock frequency s10 and generates an integrated signal s4, which is compared with the thresholds, assumed to be infinite, of an ideal quantizer (block b4, QUANT), K being the separation between the thresholds.

The output of a block b4 is a signal s5 quantized with step K, whose transitions, sampled at a clock frequency s11, generate the justification events in a block b5 (JUST); these events are overlapped at prefixed time periods to a local clock signal s6 for generating the resynchronized clock signal for the justification s7.

The application of s7 at the input of the block b1 by means of the line 11 causes the closing of the feedback loop, resulting in a mean equality relationship between the frequencies associated to the clock signals s1 and s7, the result to which the justification technique is directed.

The described structure is a discrete, nonlinear and sampled control system since the justification events can occur only in prefixed time periods.

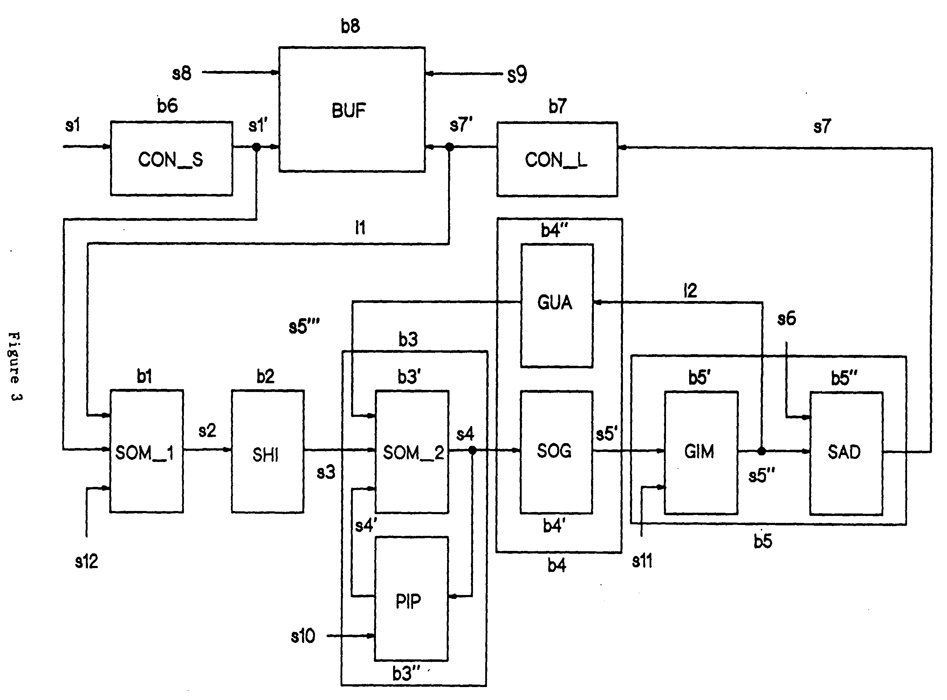

A possible implementation of the method, using a completely digital technique, is shown in Figure 3, wherein an elastic memory (block b8, BUF) works as an interface between data (s8) associated to the remote clock signal s1 and data (s9) resynchronized by the justification with the local clock signal s7.

In Figure 3, the reference symbol s1' indicates the numerical value, encoded in binary system as a complement to 2, of the phase associated to the writing clock of the elastic memory, generated by a writing counter controlled by s1 (block b6, CON_S) and s7' that is the similar signal related to the reading clock generated by a reading counter controlled by s7 (block b7, CON_L).

The reading and writing phases are compared in the block b1 (SOM_1), which is a digital adder (as a complement to 2), and added to a constant polarization value s12, whose value depends on the mean frequency of the unjustified clock signal s6 and the dimension of the memory b8.

The resulting digital signal s2 is multiplied by a constant coefficient K1, dimensioned as a power of 2 and therefore can be realized by a shifter (block b2, SHI), generating the digital signal s3.

This signal is applied to a digital storage b3, formed by blocks b3' (SOM_2) and b3" (PIP), to a digital adder (as a complement to 2) and to a register of the "parallel input - parallel output" type.

The register is clocked at frequency s10; according to the described embodiment this clock rate is associated to the reading of the elastic memory (that is the clock signal on which the counter b7 (CON_L) evolves). However, any frequency value under the Shannon's theorem relatively to the signal s7' sampling is suitable.

The cumulated value s4 is quantized with step K in the block b4, which is formed by a circuit with one or two thresholds (b4', SOG), by a feedback line 12 and a gain block b4" (GUA).

A block b4' includes a threshold in the case the system must apply the decisions related to purely positive or negative justifications, and two thresholds in the case the system must apply the decisions related to both of justification types.

The result of the comparison with a thresholds s5' is applied to the justifier b5, formed by a pulse generator b5' (GIM) and by a suppressor/adder of clock pulses b5" (SAD).

The block b5' generates pulses in conjunction with the shootings of thresholds of b4', with positive or negative polarity according to the sign of exceeded threshold. The operation frequency of the device is s11, which is equal to the maximum possible frequency allowed for the evolution of justification events.

A polarized pulse series s5" on one side is applied by the line 12 to the gain block b4", on the other side causes in the block b5" the overlapping of positive or negative justifications according to the sign of pulses, the local clock signal s6, generating the resynchronized clock rate for the justification s7.

The line 12 and the block b4" establish a value K at the input of the accumulator b3, in conjunction with each justification event, and having a sign depending on the sign of the introduced justification.

This limits the dynamics of the accumulator b3 and the dynamics of the threshold circuit b4', that, in the conceptual scheme of Figure 2, must be considered nominally as infinite.

The reading counter b7 of the elastic memory reconstructs s7', which is applied again to the block b1 of phase comparison, causing the closing of the feeback loop.

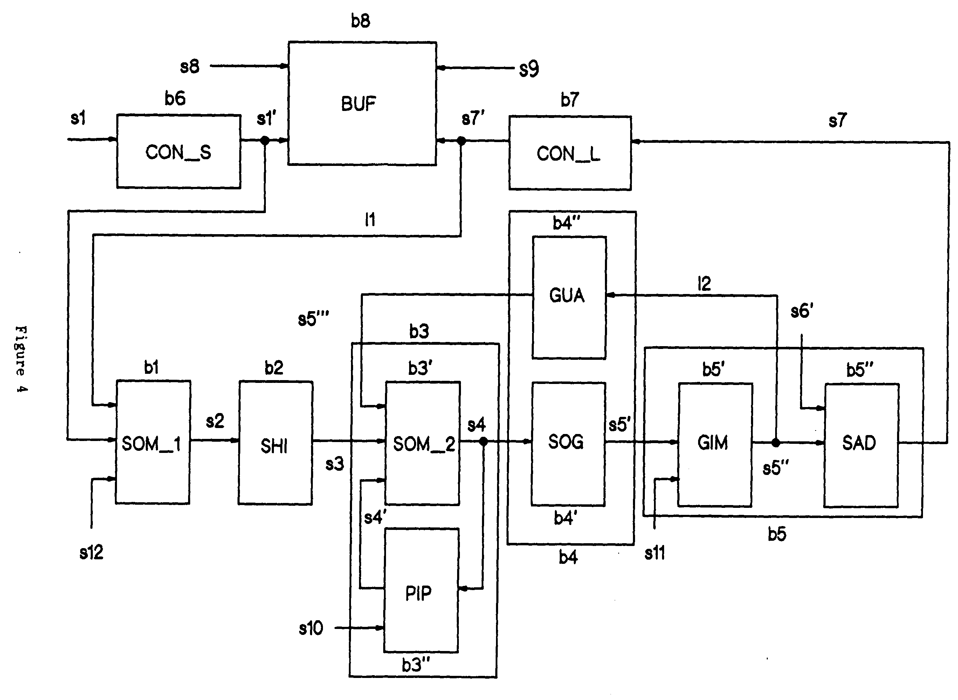

Figure 4 represents a variant of the scheme of Figure 3, in which a circuit having one sole threshold (block b4', SOG) is used also for the case of a frame characterized by positive-negative justification.

Using this implementation the local unjustified clock signal s6 is formed by a signal s6' on which rigidly preestablished justifyings of determined polarity are overlapped at suitable frequency. In this case, the invention accomplishes the sole justifications of polarity opposite to the preestablished polarities, necessary and sufficient to reach the resynchronization.

The operation of the invention can be theoretically expressed as follows.

With reference to Figure 2, the mean frequency f_{I} of the justification events generated on the signal s7 due to a value ϕ_{D} of the phase comparison signal s2 can be written as follows:${\text{f}}_{\text{I}} {\text{= K1/K ϕ}}_{\text{D}} {\text{f}}_{\text{CAMP}}$ f_{CAMP} being the value of the frequency associated to the clock s10.

Therefore the assembly of blocks b2, b3, b4, b5 is generally similar to a controlled oscillator of the type NCO ("Number Controlled Oscillator"), whose gain is:$\frac{{\text{f}}_{\text{I}}}{{\text{ϕ}}_{\text{D}}} {\text{= K1/K . f}}_{\text{CAMP}}$ and then the invention can be considered a Phase Locked Loop (PLL) of the first order, characterized by a bandwidth B equal to (see e.g. F.M. Gardner, "Phaselock Techniques", Wiley, 1966):$\text{B =} \frac{{\text{f}}_{\text{CAMP}} \text{. K1}}{\text{2πK}}$

As is known from the theory of automatic controls (e.g. see S. Bittanti, N. Schiavoni, "Models and Controls", vol. II, CLUP, 1979) a system of this type has a low-pass characteristic with respect to a signal sent in input towards the phase comparator, and a high-pass characteristic with respect to a signal sent to output towards the controlled oscillator.

Since the phase resynchronization noise is an effect of the quantization related to the justification process, it can be considered a signal sent into the feedback loop to the output of the block b5, and then to the output of controlled oscillator.

Consequently the device carries out an operation of high-pass filtering onto the resynchronization phase noise with a notch frequency given by the equation (4), and therefore it can be suitably sized by the selection of the coefficients K and K1 for each operation condition related to the frequency of the incoming plesiochronous flow and to the type of used justification.

This filtering allows to eliminate the components of low frequency of phase noise; the components of the high frequency components are automatically cut by the PLL, that makes the desynchronization in reception.

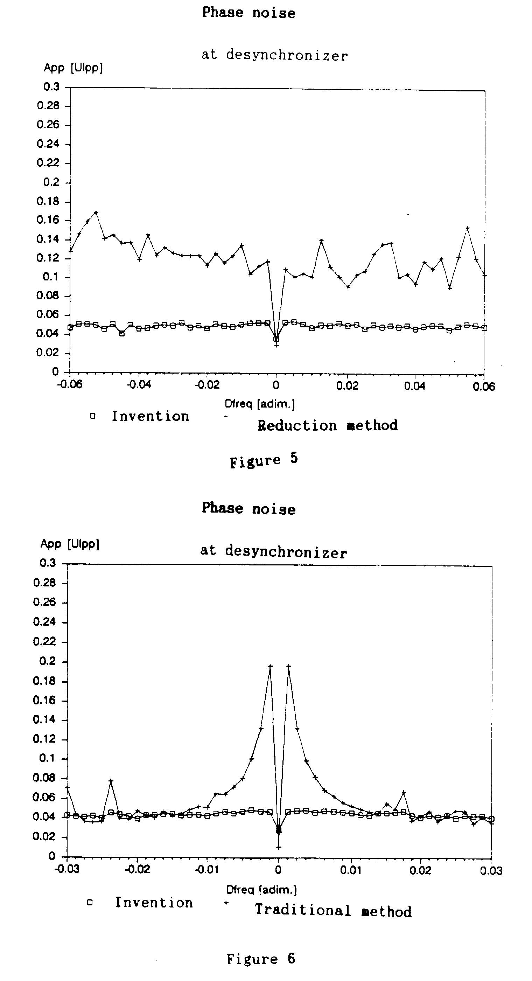

The results obtained by the application of this method are resumed in Figures 5 and 6.

In case of positive-negative justification comparison is made with one of the reduction techniques recently proposed in literature referred above, a comparison with the conventional technique in case of purely positive or negative justification.

The improvements obtained in both cases by the application of the invention are evident in terms of uniformity and absolute values of attenuation of the phase noise generated by the resynchronization process.

## Claims

1. A method for reducing phase noise introduced during resynchronisation by justification of digital signals used in data and/or voice transmission, comprising the steps of
obtaining a phase comparison signal (s2) between a local justified clock signal (s7) and a remote clock signal (s1);
modifying the phase comparison signal (s2) by a suitable scale factor;
integrating the modified phase comparison signal (s3) with a suitable frequency;
quantizing the integrated signal (s4); and
determining the justification events which are to be overlapped to a local unjustified clock signal (s6) in conjunction with the transitions of the quantized signal (s5) to generate said local justified clock signal (s7).

2. The method according to claim 1, wherein the scale factor, the frequency for integration and the quantizing step are selected in accordance with the transmission bandwidth.

3. The method according to claim 1 or 2, wherein justifications are established in one direction or in the other direction according to whether the integrated signal (s4) has an increasing or a decreasing behaviour.

4. The method according to any of claims 1 to 3, wherein a case of positive-negative justification is reduced to a case of purely positive or negative justification by introducing preestablished justifications of predetermined polarity with a proper frequency in the local unjustified clock signal (s6).

5. A device for reducing phase noise introduced during resynchronization by justification of digital signals used in data and/or voice transmission, comprising
means (block b1) for generating a phase comparison signal (s2) between a justified clock signal (s7) and a remote clock signal (s1);
means (block b2) for modifying the comparison signal (s2) by a suitable scale factor;
means (block b3) for integrating the modified phase comparison signal (s3) with a suitable frequency;
means (block b4) for quantizing the integrated signal (s4); and
means (block b5) for generating the local justified clock signal (s7) by using transitions of the quantized signal (s5) to determine which justification events are to be overlapped with a local unjustified clock signal (s6) to generate said local justified clock signal (s7).

6. The device according to claim 5, wherein said means (block bl) for generating a phase comparison signal comprises a digital adder, said means (block b2) for modifying the comparison signal comprising a digital shifter, said means (block b3) for integrating comprises a digital adder (block b3') and a parallel input/parallel output register (block b3"), said means (block b4) for quantizing comprises a comparator with one or two thresholds (block b4'), and said means (block b5) for generating the local justified clock signal comprises a pulse generator (block b5') and a suppressor/adder of clock signals (block b5") .

7. The device according to claim 6, further comprising an elastic memory formed of a buffer (block b8), a writing counter (block b6) and a reading counter (block b7), said elastic memory operating as an interface between data associated with the remote clock signal (s1) and data associated with the local justified clock signal (s7).

8. The device according to claim 7, wherein the means (block b1) for generating a phase comparison signal performs the generation of the phase comparison signal (s2) in numerical form by binary subtraction as complement to 2 of data from writing and reading counters of the elastic memory.

9. The device according to claim 7 or 8, wherein the means (block b1) for generating a phase comparison signal adds a constant (s12) to the phase comparison signal (s2), said constant being based upon the dimension of the elastic memory and the main frequency of the local unjustified clock signal (s6).

10. The device according to any of claims 6 to 9, wherein said means (block b4) for quantizing includes a gain block (block b4"), said means (block b5) for generating the local justified clock signal further includes a pulse generator (block b5'), wherein said gain block and said pulse generator are connected by a feedback line (line 12) so that taking into account with said comparator circuit with one or two thresholds a quantizer with infinite thresholds is achieved.

## Patentansprüche

1. Verfahren zum Verringern von Phasenrauschen, das durch Neusynchronisierung von bei der Daten- und/oder Sprachübertragung verwendeter digitaler Signale mittels Pulsstopfen verursacht wird, mit den Schritten
des Erhaltens eines Phasenvergleichssignals (s2) zwischen einem lokalen gestopften Taktsignal (s7) und einem Fern-Taktsignal (s1);
des Modifizierens des Phasenvergleichssignals (s2) durch einen geeigneten Normierungsfaktor;
des Integrierens des modifizierten Phasenvergleichssignals (s3) mit einer geeigneten Frequenz;
des Quantisierens des integrierten Signals (s4); und
des Bestimmens der Pulsstopfereignissen, die einem lokalen ungestopften Taktsignal (s6) gemeinsam mit den Zugängen des quantisierten Signals (s5) überlagert werden sollen, um das lokale gestopfte Taktsignal (s7) zu erzeugen.

2. Verfahren gemäß Anspruch 1, wobei der Normierungsfaktor, die Integrationsfrequenz und der Quantisierungsschritt in Übereinstimmung mit der Übertragungsbandbreite ausgewählt werden.

3. Verfahren gemäß Anspruch 1 oder 2, wobei das Pulsstopfen in die eine oder in die andere Richtung, danach ausgerichtet, ob das integrierte Signal (s4) zunimmt oder abnimmt, eingerichtet wird.

4. Verfahren gemäß einem der Ansprüche 1 bis 3, wobei ein Fall von positiv-negativ-Pulsstopfen auf einen Fall des ausschließlich positiven oder negativen Pulsstopfens durch Einführen von stabilisierten Pulsstopfens von vorbestimmter Polarität bei einer geeigneten Frequenz in das lokale ungestopfte Taktsignal (s6) reduziert wird.

5. Vorrichtung zum Verringern von Phasenrauschen, das durch Neusynchronisierung von bei der Daten- und/oder Sprachübertragung verwendeter digitaler Signale durch Pulsstopfen verursacht wird, mit
einer Einrichtung (block b1) zum Erzeugen eines Phasenvergleichssignals (s2) zwischen einem gestopften Taktsignal (s7) und einem Fern-Taktsignal (s1);
einer Einrichtung (block b2) zum Modifizieren des Vergleichssignals (s2) durch einen geeigneten Nomierungsfaktor;
eine Einrichtung (block b3) zum Integrieren des modifizierten Phasenvergleichssignals (s3) mit einer geeigneten Frequenz;
einer Einrichtung (block b4) zum Quantisieren des integrierten Signals (s4); und
einer Einrichtung (block b5) zum Erzeugen des lokalen gestopften Taktsignals (s7) durch Verwendung der Zugänge des quantisierten Signals (s5), um zu bestimmen, welche Pulsstopfereignisse mit dem lokalen ungestopften Taktsignal (s6) überlagert werden sollen, um das lokale gestoppte Taktsignal (s7) zu erzeugen.

6. Vorrichtung gemäß Anspruch 5, wobei die Einrichtung (block b1) zum Erzeugen eines Phasenvergleichssignals einen digitalen Addierer aufweist, die Einrichtung (block b2) zum Modifizieren des Vergleichssignals einen digitalen Verschieber aufweist, die Einrichtung (block b3) zum Integrieren einen digitalen Addierer (block b3') und ein paralleles Eingabe/paralleles Ausgabe-Register (block b3") aufweist, die Einrichtung zum Quantisieren einen Vergleicher mit ein oder zwei Schwellen (block b4') aufweist, und die Einrichtung (block b5') zum Erzeugen des lokalen gestopften Taktsignals einen Pulsgenerator (block b5') und einen Unterdrücker/Addierer von Taktsignalen (block b5") aufweist.

7. Vorrichtung gemäß Anspruch 6, weiter aufweisend einen aus einem Puffer (block b8) gebildeten elastischen Speicher, einen Schreib-Zähler (block b6) und einen Lese-Zähler (block b7), wobei der elastische Speicher als Schnittstelle zwischen mit dem Fern-Taktsignal (s1) verknüpften Daten und mit dem lokalen gestopften Taktsignal (s7) verknüpften Daten betrieben wird.

8. Vorrichtung gemäß Anspruch 7, wobei die Einrichtung (block b1) zum Erzeugen eines Phasenvergleichssignals die Erzeugung des Phasenvergleichssignals (s2) in numerischer Form durch binäre Substraktion als Komplement von 2 der Daten aus den Schreib- und Lese-Zählern des elastischen Speichers ausführt.

9. Vorrichtung gemäß Anspruch 7 oder 8, wobei die Einrichtung (block b1) zum Erzeugen eines Phasenvergleichssignals eine Konstante (s12) zum Phasenvergleichssignal (s2) addiert, wobei die Konstante auf der Dimension des elastischen Speichers und der Hauptfrequenz des lokalen ungestopften Taktsignals (s6) fußt.

10. Vorrichtung gemäß einem der Ansprüche 6 bis 9, wobei die Einrichtung (block b4) zum Quantisieren einen Verstärkerblock (block b4") aufweist, die Einrichtung (block b5) zum Erzeugen des lokalen gestopften Taktsignals weiter einen Pulsgenerator (block b5') aufweist, wobei der Verstärkerblock und der Pulsgenerator miteinander durch eine Rückkopplungsleitung (Leitung 12) verbunden sind, so daß unter Berücksichtigung der Vergleichsschaltung mit einem oder zwei Schwellen ein Quantisierer mit unbegrenzten Schwellen erhalten wird.

## Revendications

1. Procédé pour réduire un bruit de phase introduit pendant la resynchronisation par justification de signaux numériques utilisés en transmission de données et/ou de paroles, comportant les étapes consistant à :
obtenir un signal (s2) de comparaison de phase entre un signal d'horloge local justifié (s7) et un signal d'horloge distant (s1) ;
modifier par un facteur d'échelle approprié le signal (s2) de comparaison de phase ;
intégrer avec une fréquence appropriée le signal de comparaison de phase modifié (s3) ;
quantifier le signal intégré (s4) ; et
déterminer les événements de justification qui doivent être superposés à un signal d'horloge local non justifié (s6) en conjonction avec les transitions du signal quantifié (s5) pour générer ledit signal d'horloge local justifié (s7).

2. Procédé selon la revendication 1, dans lequel le facteur d'échelle, la fréquence pour l'intégration et l'étape de quantification sont sélectionnés en fonction de la largeur de bande de transmission.

3. Procédé selon la revendication 1 ou 2, dans lequel des justifications sont établies dans une direction ou dans l'autre direction selon que le signal intégré (s4) a un comportement d'augmentation ou de diminution.

4. Procédé selon l'une quelconque des revendications 1 à 3, dans lequel un cas de justification positive-négative est réduit à un cas de justification purement positive ou négative en introduisant dans le signal d'horloge local non justifié (S6) des justifications préétablies à polarité prédéterminée avec une fréquence appropriée.

5. Dispositif pour réduire un bruit de phase introduit pendant la resynchronisation par justification de signaux numériques utilisés en transmission de données et/ou de paroles, comprenant :
un moyen (bloc b1) pour générer un signal (s2) de comparaison de phase entre un signal d'horloge justifié (s7) et un signal d'horloge distant (s1) ;
un moyen (bloc b2) pour modifier par un facteur d'échelle approprié le signal de comparaison (s2) ;
un moyen (bloc b3) pour intégrer avec une fréquence appropriée le signal de comparaison de phase modifié (s3) ;
un moyen (bloc b4) pour quantifier le signal intégré (s4) ; et
un moyen (bloc b5) pour générer le signal d'horloge local justifié (s7) en utilisant des transitions du signal quantifié (s5) pour déterminer quels événements de justification doivent être superposés à un signal d'horloge local non justifié (s6) pour générer ledit signal d'horloge local justifié (s7).

6. Dispositif selon la revendication 5, dans lequel ledit moyen (bloc 1) pour générer un signal de comparaison de phase comprend un additionneur numérique, ledit moyen (bloc b2) pour modifier le signal de comparaison comprenant un système de déplacement numérique, ledit moyen d'intégration (bloc b3) comprend un additionneur numérique (bloc b3') et un registre à entrée parallèle/sortie parallèle (bloc b3"), ledit moyen de quantification (bloc b4) comprend un comparateur avec un ou deux seuils (bloc b4'), et ledit moyen (bloc b5) pour générer le signal d'horloge local justifié comprend un générateur d'impulsions (bloc b5') et un suppresseur/additionneur de signaux d'horloge (bloc b5") de signaux d'horloge.

7. Dispositif selon la revendication 6, comportant en outre une mémoire élastique constituée par une mémoire tampon (bloc b8), un compteur d'écriture (bloc b6) et un compteur de lecture (bloc b7), ladite mémoire élastique servant d'interface entre les données associées au signal d'horloge distant (si) et les données associées au signal d'horloge local justifié (s7).

8. Dispositif selon la revendication 7, dans lequel le moyen (bloc b1) pour générer un signal de comparaison de phase effectue la génération du signal (s2) de comparaison de phase sous une forme numérique par soustraction binaire comme complément à 2 de données issues des compteurs d'écriture et de lecture de la mémoire élastique.

9. Dispositif selon la revendication 7 ou 8, dans lequel le moyen (bloc b1) pour générer un signal de comparaison de phase ajoute une constante (s12) au signal (s2) de comparaison de phase, ladite constante étant basée sur la dimension de la mémoire élastique et la fréquence principale du signal d'horloge local non justifié (s6).

10. Dispositif selon l'une quelconque des revendications 6 à 9, dans lequel ledit moyen de quantification (bloc b4) comporte un bloc de gain (bloc b4"), ledit moyen (bloc 5) pour générer le signal d'horloge local justifié comporte en outre un générateur d'impulsions (bloc b5'), ledit bloc de gain et ledit générateur d'impulsions étant reliés par une ligne de retour (ligne 12) de façon que, compte tenu dudit circuit de comparaison à un ou deux seuils, un quantificateur à seuils infinis soit réalisé.
